# EUROPÄISCHE PATENTANMELDUNG

(11) **EP 1 162 354 A2**
(43) Veröffentlichungstag der Anmeldung: **12.12.2001**
(21) Anmeldenummer: 01109426.5
(22) Anmeldetag: 20.04.2001
(51) Int. Cl.: F02B 77/13

(54) **Kapselung für eine Luft ansaugende Maschine**

(30) Priorität: 22.04.2000 DE 10020109
(71) Anmelder: FILTERWERK MANN & HUMMEL GMBH, 71638 Ludwigsburg (DE)
(72) Erfinder: Füsser, Rolf, 76332 Bad Herrenalb (DE)
(74) Vertreter: Voth, Gerhard, Dipl.-Ing.

(57) **Zusammenfassung**

Es wird eine Kapselung für eine Luft ansaugende Maschine, z. B. für einen Kompressor 11 für einen Brennstoffzellenantrieb 13 vorgeschlagen, welche ein geschlossenes Volumen darstellt, so dass dieses akustisch für die angesaugte Luft genutzt werden kann. In die Kapselung 12, die aus einem Schall dämmenden und schluckenden Material 18 besteht, wird eine Luftansaugung 17 hineingeführt, so dass der Resonanzraum 19 als Reihenschlussresonator wirkt. Die Luft wird über einen Lufteinzug 21 des Kompressors 11 angesogen. Alternativ kann der Resonanzraum auch als Nebenschlussresonator verwendet werden, indem der Ansaugweg für die Luft in der Kapselung 12 geschlossen ausgeführt ist und nur kommunizierende Öffnungen zum Resonanzraum aufweist.

## Beschreibung

Die Erfindung bezieht sich auf eine Kapselung für eine Luft ansaugende Maschine, insbesondere einen Kompressor für einen Brennstoffzellenantrieb, nach der Gattung des Patentanspruches 1. Weiterhin betrifft die Erfindung eine Baugruppe, welche neben der Kapselung auch die Luft ansaugende Maschine enthält, nach der Gattung des Patentanspruches 2.

Es ist bekannt, Körperschall abstrahlende Geräte mit einer Kapselung zu versehen, die den von diesen Geräten ausgesandten Schall dämmt und bei Auskleidung mit Absorptionsmaterial auch schluckt. Die Kapselungen bestehen bevorzugt aus akustischen Dämmmaterialien, welche die Schallenergie nicht an die Umwelt durchlassen.

Derartige Kapselungen benötigen jedoch einen zusätzlichen Einbauraum. In der Kraftfahrzeugtechnik sind die Schall abstrahlenden Maschinen, beispielsweise die Brennkraftmaschine oder auch der Kompressor für einen Brennstoffzellenantrieb jedoch in engen Einbauräumen angeordnet. Wird eine beschriebene Kapselung vorgesehen, so muss der hierfür notwendige Einbauraum z. B. durch eine Verkleinerung akustisch wirksamer Volumina im Ansaugweg der Luft ansaugenden Maschine eingespart werden. Die Kapselung stellt daher in den meisten Fällen einen akustischen Kompromiss dar.

Aufgabe der Erfindung ist daher die Schaffung einer Kapselung für eine Luft ansaugende Maschine bzw. einer Baugruppe, enthaltend die Kapselung und die Luft ansaugende Maschine, wobei das zur Geräuschdämmung verwendete Volumen möglichst optimal genutzt werden soll. Diese Aufgabe wird durch die Merkmale der Patentansprüche 1 sowie 2 gelöst.

### Vorteile der Erfindung

Die erfindungsgemäße Kapselung umschließt die Luft ansaugende Maschine vollständig. Hierdurch lässt sich eine optimale Geräuschisolierung hinsichtlich des von der Luft ansaugenden Maschine abgestrahlten Körperschalls erreichen. Die erfindungsgemäße Kapselung ist dadurch gekennzeichnet, dass diese zur Umgebung hin vollständig abgedichtet ist, wodurch das durch sie eingeschlossene Volumen nicht mit der Umgebung kommunizieren kann. Dadurch wird ein Resonanzraum gebildet, der nur mit dem Luftansaugweg der Maschine kommunizieren kann. Damit ist das durch die Kapselung eingeschlossene Volumen gleichzeitig als akustisch wirksames Volumen für das Ansauggeräusch der Luft ansaugenden Maschine verwendbar. Die Kapselung erhält dadurch eine Doppelfunktion. Gleichzeitig ist die Schall dämmende und schluckende Eigenschaft des Kapselungsmaterials und die Resonatoreigenschaft des eingeschlossenen Volumens nutzbar.

Das eingeschlossene Volumen wird im Vergleich zu den sonst im Ansaugweg für akustische Maßnahmen zur Verfügung stehenden Volumina recht groß ausfallen. Es eignet sich daher insbesondere zur Verringerung niederfrequenter Geräuschanteile im Ansauggeräusch. Durch die in der Kapselung vorgesehenen Baukomponenten ergibt sich eine komplexe Geometrie des Resonatorvolumens. Bewirkt wird daher eine breitbandige Wirkung der Geräuschminderung, betrachtet über die Frequenz des Ansauggeräusches.

Die erfindungsgemäße Kapselung ist insbesondere für Kompressoren geeignet, wie sie bei Brennstoffzellenantrieben verwendet werden. Die Erfordernisse eines hohen volumetrischen Wirkungsgrades und die Verringerung der Feuchtigkeitsaufnahmefähigkeit der Luft führen zur Auswahl von Kompressoren mit sehr hoher Leistungsdichte. Diese Kompressoren strahlen bauartbedingt sowohl an der Saugmündung wie auch über die Gehäusewände ein lautes Geräusch ab. Die erfindungsgemäße Kapselung ist in der Lage, sowohl den Körperschall über die Gehäusewände des Kompressors zu dämmen, als auch das Mündungsgeräusch wirksam zu dämpfen. Damit lässt sich das Kompressorengeräusch an das Geräuschniveau der restlichen Funktionen des Brennstoffzellenantriebs anpassen, so dass es nicht als unangenehmes Störgeräusch auffällt.

Nach einer besonderen Ausgestaltung der Erfindung wird die Luftansaugung, die in die Kapselung hineinführt, mit einem Luftfilter versehen. Eine Filterung der Luft ist z. B. bei Brennkraftmaschinen oder Brennstoffzellenantrieben notwendig. Der Luftfilter ist im allgemeinen in einem Gehäuse vorgesehen, welches selbst als akustisches Volumen zur Dämpfung des Ansauggeräusches beiträgt. Das Gehäuse kann einzeln ausgeführt sein oder in die Kapselung bzw. das durch die Kapselung umschlossene Volumen integriert werden.

Eine weitere günstige Ausgestaltung der Erfindung ergibt sich, wenn neben der Luft ansaugenden Maschine weitere Schall abstrahlende Komponenten in der Kapselung untergebracht werden. Damit lässt sich das Gesamtgeräusch der Funktionsgruppe, welche z. B. ein Kraftfahrzeug darstellen kann, vermindern. Die Kapselung wirkt in diesem Fall in ihrer Schall dämmenden und schluckenden Eigenschaft. Beispiele für andere Schall abstrahlende Komponenten können Turbolader oder Elektromotoren sein.

Eine sinnvolle Ausgestaltung der Erfindung sieht vor, dass der Resonanzraum als Reihenschlussresonator arbeitet. Dies bedeutet, dass die Luftansaugung in das durch die Kapselung gebildete Volumen mündet und die Luft ansaugende Maschine ihrerseits eine Ansaugöffnung aufweist. Damit muss die angesaugte Luft den Resonanzraum durchqueren. Eine andere Möglichkeit sieht vor, den Resonator als Nebenschlussresonator zu nutzen. In diesem Falle bildet der Ansaugweg der Luft von der Luftansaugung bis zur Luft ansaugenden Maschine im wesentlichen ein zusammenhängendes Kanalsystem, welches beliebige Öffnungen zum Resonanzraum aufweisen muss, um mit diesem akustisch kommunizieren zu können. Selbstverständlich sind zwischen den beschriebenen Wirkungsweisen als Reihenschluss- oder Nebenschlussresonator Bauformen denkbar, bei denen die beschriebenen Effekte sich überlagern. Dies ist z. B. vorstellbar, wenn die Ansaugöffnung der Luft ansaugenden Maschine und die Auslassöffnung der Luftansaugung so nah beieinander angeordnet werden, dass sich zwischen diesen beiden Öffnungen lediglich ein zum Resonanzraum führender Spalt ergibt.

Es ist vorteilhaft, die Luft ansaugende Maschine mit einem Sicherheitsfilter auszurüsten, welcher am im Resonanzraum befindlichen Einlass derselben eingeordnet sein kann. Schmutzteilchen, die aufgrund einer Undichtheit der Kapselung trotz der vorherigen Filterung der angesaugten Luft in den Resonanzraum gelangen, können durch den Sicherheitsfilter abgeschieden werden. Dadurch erhöht sich die Zuverlässigkeit der gesamten Baugruppe bzw. die Anforderungen an die Dichtheit der Kapselung werden verringert.

Eine andere Möglichkeit, die Luft ansaugende Maschine vor Schmutzteilchen in dem Resonanzraum zu schützen, ist die Anordnung einer schalldurchlässigen Wand im Luftansaugweg, welche mit dem Resonanzraum kommuniziert. Hierdurch ist eine akustische Kommunikation des Resonanzraumes mit dem Luftansaugweg gewährleistet. Die schalldurchlässige Wand kann undurchlässig für eventuelle Schmutzteilchen ausgeführt sein und übernimmt damit die Funktion entsprechend dem Sicherheitsfilter.

Die schalldurchlässige Wand kann sogar absolut luftdicht ausgeführt sein. Zum Beispiel kann die Anordnung einer Membran in den Wandungen des Ansaugweges die Schallschwingungen vom Inneren des Ansaugweges auf den Resonanzraum übertragen. Damit ist eine solche Membran schalldurchlässig, wenn auch ein Austausch von Luft zwischen Resonanzraum und Luftansaugweg nicht erfolgt.

Die schalldurchlässige Wand kann insbesondere durch einen flexiblen Schlauch gebildet sein, der als Leitungsabschnitt in den Ansaugweg der Luft eingebaut ist. Hierbei werden bevorzugt Schläuche mit einer schaumartigen Struktur verwendet, welche auf einen Stützschlauch, der z. B. aus Gewebe bestehen kann, aufgebracht sind. Diese Schläuche stellen ein vergleichsweise billiges Halbzeug dar, welches problemlos in den Luftansaugweg integriert werden kann. Auf diese Weise lässt sich der Resonanzraum in der Kapselung ohne Gefährdung der Luft ansaugenden Maschine nutzen. Außerdem steigt durch Anordnung des beschriebenen Schlauches die geometrische Gestaltungsfreiheit bei der Anordnung der Luft ansaugenden Maschine in der Kapselung.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: das Blockschaltbild eines Brennstoffzellenantriebs mit als Reihenschlussresonator wirkender Kapselung und
- Figur 2: eine Anordnung gemäß Figur 1 mit Kapselung die als Nebenschlussresonator arbeitet.

### Beschreibung der Ausführungsbeispiele

Bei der erfindungsgemäßen Baugruppe 10, die zumindest einen Kompressor 11 und eine Kapselung 12 enthält, wird die angesaugte Luft einem Membranstapel 13 zugeführt, welcher als Energiequelle für einen Brennstoffzellenantrieb dient. Die Luft gelangt über einen Ansaugstutzen 14 in einen Luftfilter 15 und von dort über einen Schalldämpfer 16 zu einem als Luftansaugung 17 bezeichneten Leitungsbereich, der durch eine Wandung 18 der Kapselung 12 führt. Die Wandung der Kapselung kann z. B. aus Kunststoff bestehen, welcher innen mit einem offenzelligen Schaumstoff beschichtet ist.

Die Kapselung bildet einen Resonanzraum 19, in dem unterschiedliche Schall abstrahlende Komponenten 20 und der Kompressor angeordnet sind. Der Kompressor ist mit einem Lufteinzug 21 versehen, welcher mit einem Sicherheitsfilter 22 ausgestattet ist. Lufteinzug 21 und Luftansaugung 17 sind so weit voneinander entfernt, dass die angesaugte Luft den Resonanzraum 19 durchqueren muss. Daher wirkt dieser als Reihenschlussresonator.

Nach der Verdichtung wird die Luft über eine Zuführleitung 23 direkt dem Membranstapel zugeführt. Die Luft verlässt den Membranstapel durch einen Auslass 24.

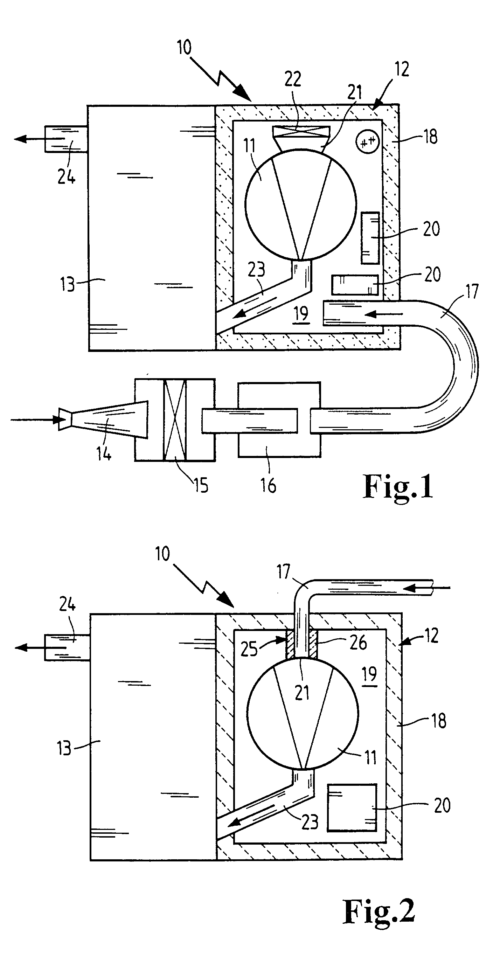

In Figur 2 ist eine Anordnung der bereits in Figur 1 beschriebenen Komponente dargestellt, welche zu einer Nutzung des Resonanzraumes 19 als Nebenschlussresonator führt. Der Ansaugweg der Luft vor der Luftansaugung 17 ist nicht dargestellt, kann jedoch genau so wie in Figur 1 dargestellt erfolgen. Die Luftansaugung 17 ist mit dem Lufteinzug 21 des Kompressors 11 durch einen Schlauch 25 verbunden, dessen Hülle als schalldurchlässige Wand 26 wirkt. Durch diese Wand ist der Resonanzraum 19 akustisch wirksam mit dem Ansaugweg der Luft für den Kompressor 11 verbunden.

## Patentansprüche

1. Kapselung (12) für eine Luft ansaugende Maschine, insbesondere einen Kompressor (11) für einen Brennstoffzellenantrieb, wobei die Maschine durch die Kapselung vollständig umschlossen ist, **dadurch gekennzeichnet, dass** die Kapselung zur Umgebung hin abgedichtet ist, wodurch ein Resonanzraum (19) gebildet ist, der mit dem Luftansaugweg der Maschine kommuniziert, und eine Luftansaugung (17) der Maschine durch eine Wandung (18) der Kapselung geführt ist.

2. Baugruppe, enthaltend eine Kapselung (12), in die eine Luft ansaugende Maschine, insbesondere ein Kompressor (11) für einen Brennstoffzellenantrieb, eingebaut ist, **dadurch gekennzeichnet, dass** die Kapselung zur Umgebung hin abgedichtet ist, wodurch ein Resonanzraum (19) gebildet ist, der mit dem Luftansaugweg der Maschine kommuniziert, und eine Luftansaugung (17) der Maschine durch eine Wandung (18) der Kapselung geführt ist.

3. Baugruppe nach Anspruch 2, **dadurch gekennzeichnet, dass** die Luftansaugung (17) mit einem Luftfilter (15) versehen ist.

4. Baugruppe nach einem der Ansprüche 2 oder 3, **dadurch gekennzeichnet, dass** neben der Luft ansaugenden Maschine weitere Schall abstrahlende Komponenten (20) in der Kapselung (12) untergebracht sind.

5. Baugruppe nach einem der Ansprüche 2 bis 4, **dadurch gekennzeichnet, dass** der Resonanzraum als Reihenschlussresonator bezüglich des Ansaugweges der Luft ansaugenden Maschine ausgeführt ist.

6. Baugruppe nach Anspruch 5, **dadurch gekennzeichnet, dass** die Luft ansaugende Maschine in dem mit dieser verbundenen und im Resonanzraum befindlichen Teil des Ansaugweges für die Luft mit einem Sicherheitsfilter ausgestattet ist.

7. Baugruppe nach einem der Ansprüche 2 bis 4, **dadurch gekennzeichnet, dass** der Resonanzraum als Nebenschlussresonator bezüglich des Ansaugweges der Luft ansaugenden Maschine ausgeführt ist.

8. Baugruppe nach Anspruch 7, **dadurch gekennzeichnet, dass** der Resonanzraum durch eine schalldurchlässige Wand (26) von dem Ansaugweg der Luft getrennt ist.

9. Baugruppe nach Anspruch 8, **dadurch gekennzeichnet, dass** die schalldurchlässige Wand (26) luftdicht ausgeführt ist, so dass eine vollständige Abdichtung zwischen Resonanzraum und dem Ansaugweg der Luft zustande kommt.

10. Baugruppe nach Anspruch 9, **dadurch gekennzeichnet, dass** die schalldurchlässige Wand durch einen flexiblen Schlauch (25) gebildet ist, der einen Leitungsabschnitt des Ansaugweges der Luft darstellt.

11. Baugruppe nach einem der vorherigen Ansprüche, **dadurch gekennzeichnet, dass** die Kapsel innen mit einem Schall absorbierenden Material, insbesondere offenporigem Kunststoffschaum, ausgekleidet ist.
